# FASCICULE DE BREVET EUROPEEN

(11) **EP 2 407 361 B1**
(45) Date de publication et mention de la délivrance du brevet: **10.02.2016**
(21) Numéro de dépôt: 11169112.7
(22) Date de dépôt: 08.06.2011
(51) Int. Cl.: B60T 11/20, B60Q 1/44, B60T 7/04

(54) **Dispositif maître-cylindre pour véhicule automobile**
Hauptbremszylindervorrichtung für Kraftfahrzeug
Master cylinder device for a car

(30) Priorité: 12.07.2010 FR 1002930
(43) Date de publication de la demande: 18.01.2012
(73) Titulaire: Robert Bosch GmbH, 70442 Stuttgart (DE)
(72) Inventeur: Vagner, Laurent, 75019 PARIS (FR); Cagnac, Bastien, 60500 CHANTILLY (FR); Richard, Philippe, 77500 CHELLES (FR); Zorino, Florent, 94400 Vitry sur Seine (FR); Fourcade, Jean, 35890 LAILLE (FR)

(56) Documents cités:
- EP-A1- 2 072 969
- DE-A1- 19 855 358
- DE-A1-102008 020 934

## Description

L'invention concerne un capteur de position d'un piston dans un maître cylindre. Plus précisément, l'invention concerne un capteur de position permettant d'allumer les feux de stop lors d'un freinage d'un véhicule automobile.

Un dispositif de freinage de véhicule automobile est généralement muni d'un servomoteur relié à un maître cylindre. Le servomoteur comporte par exemple un boîtier muni d'une paroi en tôle, contenant une chambre avant à volume variable, séparée d'une chambre arrière, également à volume variable, par une cloison formée par une membrane étanche et souple et une plaque jupe rigide. La jupe rigide entraîne un piston pneumatique prenant appui, par l'intermédiaire d'une tige de poussée, sur un piston primaire d'un maître cylindre.

Lors d'un freinage, la chambre avant du servomoteur est isolée par rapport à la chambre arrière, puis de l'air est admis dans la chambre arrière. Cette admission d'air a pour effet de propulser la cloison. La jupe rigide entraîne alors le piston pneumatique qui entraîne à son tour le piston primaire du maître cylindre par l'intermédiaire de la tige de poussée.

Lors du freinage du véhicule automobile, il est indispensable de signaler ledit freinage aux conducteurs de véhicules situés derrière le véhicule qui freine. Par exemple, lorsqu'un conducteur freine brusquement, il est important d'en informer rapidement les conducteurs des véhicules suivants, afin qu'ils puissent à leur tour anticiper un freinage et éviter ainsi un carambolage.

Il est connu pour cela d'utiliser un moyen d'information tel qu'un voyant lumineux. Ainsi, les véhicules automobiles sont munis de feux de stop. Ces feux de stop, situés à l'arrière du véhicule, s'allument lors de l'actionnemment d'une commande de frein. L'allumage des feux de stop se fait automatiquement, c'est à dire sans que le conducteur n'ait à faire une action spécifique, autre que l'actionnement de la commande de frein.

Il est important que l'allumage des feux de stop se fasse quasiment simultanément à l'actionnement de la commande de frein, afin que l'allumage soit concomitant à un début du freinage du véhicule.

On connaît comme déclencheur de l'allumage des feux de stop un dispositif muni d'un microcommutateur situé à l'endroit de la commande de frein. Si la position d'un tel microcommutateur assure une bonne réactivité de l'allumage des feux de stop, elle présente cependant des inconvénients. En effet, la présence de ce microcommutateur crée une force de rappel à l'endroit de la commande de frein. Cette force de rappel peut incommoder le conducteur du véhicule lors du freinage. De plus, l'emplacement de ce microcommutateur à l'endroit de la commande de frein est d'accès peu pratique, rendant l'installation par le constructeur difficile, et le réglage peu évident.

On connaît également un dispositif muni d'un capteur de mouvement sans contact, situé dans le maître cylindre. Ainsi, le document FR 2 885 108 ainsi que le document DE 10 2008 020934 décrivent un dispositif utilisant une pièce ferromagnétique montée en translation dans le maître cylindre. Le déplacement de la pièce ferromagnétique à l'intérieur du maître cylindre perturbe une valeur de champ magnétique détectée par un détecteur de champ magnétique associé à un aimant permanent. Ce détecteur et cet aimant permanent sont montés dans un corps du maître cylindre. Le détecteur est relié à un circuit de commande allumant des feux de stop.

On connaît également un système dit « à aiguille », comprenant un aimant, solidaire d'une tige reliée au piston primaire et coulissant dans un alésage du maître cylindre, sensiblement parallèle à l'alésage dans lequel coulisse le piston primaire. Un détecteur de champ magnétique, monté dans le corps du maître cylindre, détecte les déplacements de l'aimant à l'intérieur du maître cylindre, ces déplacements correspondant à ceux du piston primaire. Ledit détecteur est relié à un circuit de commande allumant des feux de stop.

Un inconvénient des dispositifs connus de l'état de la technique est lié à la taille de l'aimant. En effet, le diamètre maximal de l'alésage dans lequel coulisse la tige est imposé par des contraintes de réalisation du maître cylindre. Dans l'état de la technique, ledit alésage est sous la forme d'un trou borgne. Le diamètre maximal dudit alésage correspond donc au diamètre maximal de l'aimant que l'on peut fixer à la tige. Du diamètre de l'aimant dépend l'intensité du champ magnétique généré par ledit aimant. Or, cette intensité est parfois insuffisante pour engendrer une détection efficace du détecteur de champ magnétique. De faibles mouvements du piston primaire peuvent ne pas déclencher l'allumage des feux de stop.

Un objet de l'invention est de proposer une amélioration à ce dispositif, mettant en jeu une tige comportant deux parties, de diamètres différents. L'alésage de la tige a un diamètre faible dans la zone où ledit diamètre est limité par des contraintes de réalisation. Ledit alésage a un diamètre plus élevé dans une zone située à proximité du détecteur de champ magnétique.

Ainsi, il est possible de fixer sur la tige un aimant de taille plus élevée que dans l'état de la technique. Le champ magnétique généré par l'aimant est donc plus intense, ce qui améliore l'efficacité du détecteur de champ magnétique. Les mouvements les plus faibles du piston primaire sont détectés, ce qui se traduit par un allumage des feux de stop.

Un autre objet de l'invention concerne la liaison entre la tige et le piston primaire. Afin d'assurer un coulissement de l'ensemble tige / piston primaire, il convient que les axes des alésages de la tige et du piston soient parallèles. Or, des difficultés d'usinage impliquent parfois un léger décalage de direction desdits axes. Il convient que la liaison entre la tige et le piston primaire permette de compenser ce décalage.

Divers modes de liaison sont utilisés dans l'état de la technique, notamment un ressort de rappel. Ce mode de liaison implique un certain coût de réalisation. Il présente également l'inconvénient de diminuer la longueur de train du piston primaire.

L'invention offre une alternative, plus simple et plus économique, à l'utilisation dudit ressort. En effet, selon une forme préférentielle de l'invention, la tige est reliée au piston primaire par aimantation. Cette liaison est effectuée par un aimant, fixé à une extrémité de la tige, ledit aimant étant en contact avec une pièce métallique montée solidaire du piston primaire.

Lors du coulissement de l'ensemble tige / piston primaire, ledit aimant peut glisser sur la pièce métallique, perpendiculairement à l'axe de la tige. Ce type de liaison permet de conserver le contact tige / piston tout en compensant un décalage de parallélisme entre les axes desdits éléments.

L'invention concerne donc un dispositif maître cylindre pour véhicule automobile, comprenant :
- un maître cylindre muni d'un piston primaire,
- un capteur de position du piston primaire dans un corps du maître cylindre, ledit capteur commandant un dispositif d'allumage de feux de stop, ledit capteur comportant :
- un détecteur de champ magnétique, fixé sur le corps du maître cylindre,
- un aimant, solidaire d'une tige, ladite tige étant reliée au piston primaire et coulissant dans un alésage sensiblement parallèle à un alésage dans lequel coulisse le piston primaire,
caractérisé en ce que l'alésage de la tige comporte deux parties, de formes sensiblement cylindriques de révolution, un diamètre d'une partie de l'alésage de la tige, située proche du détecteur de champ magnétique, étant plus large qu'un diamètre d'une autre partie de l'alésage de la tige, située proche d'une zone de coulissement du piston primaire dans le corps du maître cylindre.

Selon une forme préférentielle de l'invention, le diamètre le plus large est compris entre 1,25 et 1,75 fois le diamètre le plus étroit.

Selon une forme préférentielle de l'invention, un axe d'une partie de l'alésage de la tige est parallèle à un axe d'une autre partie de l'alésage de la tige, l'axe de la partie de plus large diamètre étant plus proche du détecteur de champ magnétique que l'axe de la partie de plus étroit diamètre.

Selon une forme préférentielle de l'invention, une distance entre lesdits deux axes est sensiblement égale à la moitié de la différence entre les diamètres des deux parties de l'alésage de la tige,

Selon une forme préférentielle de l'invention, l'aimant est solidaire d'une partie de la tige coulissant dans la partie de l'alésage ayant le plus large diamètre ; ledit aimant a une section annulaire de diamètre externe égal audit plus large diamètre.

Selon une forme préférentielle de l'invention, le détecteur de champ magnétique est muni d'une cellule à effet Hall. L'effet Hall consiste en une différence de potentiel induite dans un matériau, en raison d'un champ magnétique dans lequel est placé ledit matériau. Une perturbation dudit champ magnétique, par exemple liée au déplacement de la source du champ, entraîne une variation de la différence de potentiel dans le matériau. Cette variation permet de détecter le déplacement de la source de champ magnétique.

Selon une forme préférentielle de l'invention, l'alésage de la tige est débouchant à deux extrémités du corps du maître cylindre ; une extrémité de l'alésage, qui débouche du côté opposé au piston primaire, est fermée par un moyen de bouchage.

Selon une forme préférentielle de l'invention, la tige est reliée au piston primaire par l'intermédiaire d'un second aimant, solidaire de ladite tige, lié magnétiquement à un élément métallique solidaire dudit piston primaire.

Selon une forme préférentielle de l'invention, le second aimant est annulaire, avec un diamètre externe égal au diamètre de la partie la plus étroite de l'alésage de la tige.

Selon une forme préférentielle de l'invention, au cours d'un déplacement en translation d'un ensemble tige / piston primaire, le second aimant peut glisser sur une surface de contact entre ledit aimant et l'élément métallique, dans une direction perpendiculaire à un axe dudit déplacement en translation.

L'invention sera mieux comprise à la lecture de la description qui suit et à l'examen des figures qui l'accompagne. Celles-ci ne sont présentées qu'à titre indicatif et nullement limitatif de l'invention. Les figures montrent :
- Figure 1 : Vue en coupe d'un dispositif maître cylindre connu de l'état de la technique ;
- Figure 2 : Vue en coupe partielle d'un dispositif maître cylindre selon un mode de réalisation de l'invention ;
- Figure 3 : Agrandissement d'une partie de la figure 2 ;
- Figure 4 : Agrandissement d'une autre partie de la figure 2.

Les références ci-après seront utilisées dans les descriptions des figures :
1 - Servomoteur
2 - Maître cylindre
3 - Tige de commande
4 - Piston pneumatique
5 - Boîtier
6 - Couvercle
7 - Cylindre
8 - Chambre arrière
9 - Chambre avant
10 - Membrane
11 - Jupe rigide
12 - Tige de poussée
13 - Piston primaire
14 - Chambre primaire
15 - Chambre secondaire
16 - Piston secondaire
17 - Fond du maître cylindre
18 - Corps du maître cylindre
19 - Alésage du piston primaire
20 - Axe de l'alésage 19
21 - Détecteur de champ magnétique
22 - Cellule à effet Hall
23 - Alésage de la tige
24 - Tige
25 - Extrémité de la tige 24
26 - Extrémité de la tige 24
27 - Aimant
28 - Partie de l'alésage 23
29 - Axe de la partie 28
30 - Diamètre de la partie 28
32 - Extrémité de l'alésage 23
33 - Extrémité de l'alésage 23
34 - Partie de l'alésage 23
35 - Axe de la partie 34
36 - Diamètre de la partie 34
37 - Distance entre les axes 29 et 35
38 - Partie de la tige 24
39 - Partie de la tige 24
40 - Rétrécissement de la tige 24
41 - Diamètre du rétrécissement 40
42 - Butée
43 - Axe de l'aimant 27
44 - Axe de la cellule 22
45 - Distance entre les axes 43 et 44
46 - Longueur de l'aimant 27
47 - Moyen de bouchage de l'extrémité 32
48 - Aimant
49 - Elément métallique
50 - Surface de l'élément 49

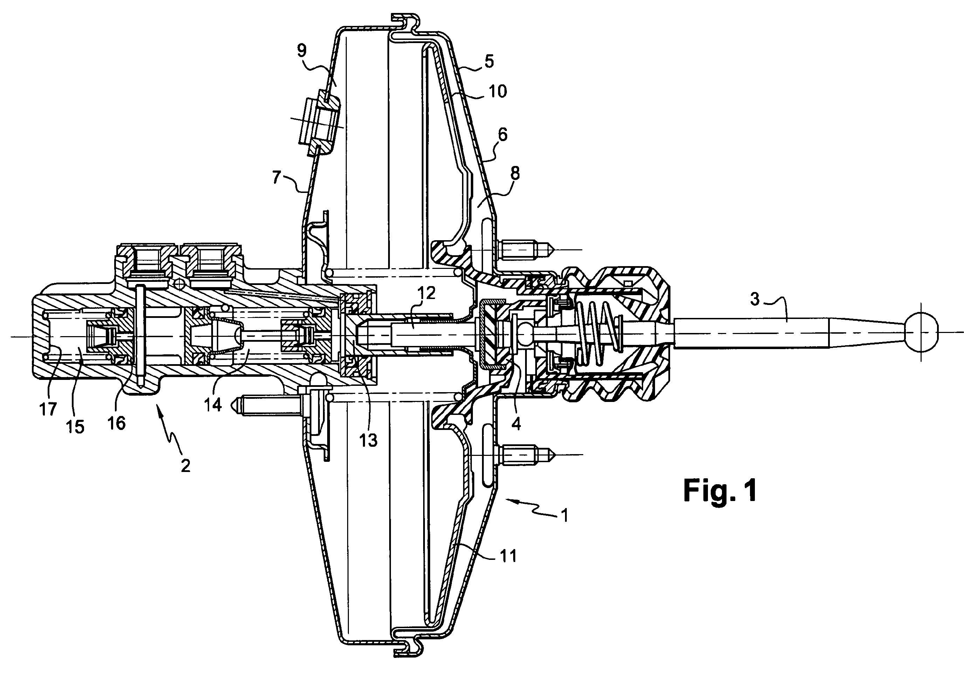

La figure 1 représente un dispositif maître cylindre muni d'un servomoteur 1 fixé à un maître cylindre 2. Une tige de commande 3 actionne un piston pneumatique 4 du servomoteur 1. La tige de commande 3 est reliée directement ou indirectement à une commande de frein. Le piston pneumatique 4 se déplace à l'intérieur d'un boîtier 5 du servomoteur 1. Ledit boîtier 5 comporte notamment un couvercle 6 et un cylindre 7. Une chambre arrière 8 du servomoteur 1 est séparée d'une chambre avant 9 par une membrane 10 étanche et souple et une plaque jupe 11 rigide. La chambre avant 9 est située côté maître cylindre 2. La chambre arrière 8 est située côté tige de commande 3. La chambre avant 9 est reliée pneumatiquement à une source de vide (non représentée). La chambre arrière 8 est susceptible d'être reliée à la pression atmosphérique.

Lorsque le dispositif de freinage n'est pas actionné, les chambres avant 9 et arrière 8 sont connectées entre elles. La chambre arrière 8 est par ailleurs isolée par rapport à la pression atmosphérique.

Lorsqu'un conducteur actionne la tige de commande 3, par exemple par l'intermédiaire d'une pédale de frein (non représentée), la chambre avant 9 est d'abord isolée par rapport à la chambre arrière 8. Puis, de l'air est admis dans la chambre arrière 8. L'admission d'air exerce une force sur la jupe 9 rigide en direction du maître cylindre 2. La jupe 11 rigide entraîne dans son avancée le piston pneumatique 4. Le piston pneumatique 4 est relié, par l'intermédiaire d'une tige de poussée 12, à un piston primaire 13 du maître cylindre 2. La tige de poussée 12 traverse la chambre avant 7 du servomoteur 1 et vient au contact du piston primaire 13. L'avancée de la tige de commande 3 entraîne l'avancée du piston primaire 13 à l'intérieur d'une chambre primaire 14 du maître cylindre 2.

Dans l'exemple décrit à la figure 1, le maître cylindre 2 est un maître cylindre tandem. Le maître cylindre 2 est donc muni d'une chambre primaire 14 et d'une chambre secondaire 15. Le piston primaire 13 avance à l'intérieur de la chambre primaire 14 en direction d'un piston secondaire 16. Le piston secondaire 16 est en translation dans la chambre secondaire 15, en direction d'un fond 17 du maître cylindre 2. Un réservoir de liquide hydraulique (non représenté) alimente les chambres 14 et 15 du maître cylindre 2 en liquide de frein. L'avancée du piston primaire 13 puis du piston secondaire 16 dans les chambres respectivement primaire 14 et secondaire 15 du maître cylindre 2 permet d'augmenter la pression à l'intérieur de chacune de ces chambres. Le liquide de frein, sous pression, actionne les freins. L'intervalle de temps entre l'actionnement de la tige de commande 3 et le freinage effectif est faible.

L'invention prévoit l'utilisation du déplacement du piston primaire 13 dans le maître cylindre 2, afin de détecter le freinage. En effet, ce déplacement du piston primaire 13 est en amont du freinage proprement dit. Ainsi, on assure un allumage des feux de stop au tout début de la phase de freinage.

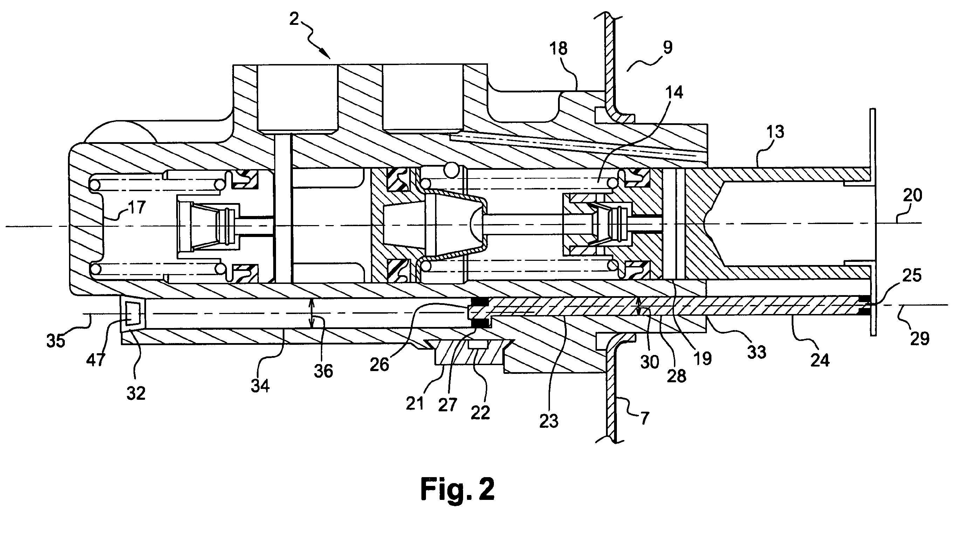

La figure 2 représente une vue en coupe partielle d'un dispositif maître cylindre selon une forme de réalisation de l'invention. Ce dispositif comporte un servomoteur, notamment muni d'un cylindre 7 et d'une chambre avant 9. Ce dispositif comporte également un maître cylindre 2 comprenant un corps 18. Ledit corps 18 est muni d'un alésage 19, dans lequel coulisse notamment un piston primaire 13. Cet alésage 19 a sensiblement la forme d'un cylindre de révolution autour d'un axe 20.

Le dispositif maître cylindre représenté à la figure 2 comporte un détecteur 21 de champ magnétique, monté fixe sur le maître cylindre. Le détecteur 21 est muni d'une cellule 22 à effet Hall. Le détecteur 21 est relié à un dispositif d'allumage de feux de stop (non représenté).

Le corps 18 du maître cylindre comporte en outre un alésage 23, dans lequel coulisse une tige 24. La tige 24, par l'une de ses extrémités 25, est reliée au piston primaire 13. Une autre extrémité 26 de la tige 24 est équipée d'un aimant 27, préférentiellement annulaire.

L'aimant 27 génère un champ magnétique, qui induit une différence de potentiel dans la cellule 22 à effet Hall. Lorsque le piston primaire 13 se déplace dans l'alésage 19, il entraîne la tige 24 en translation dans l'alésage 23. Le déplacement induit de l'aimant 27 perturbe le champ magnétique dans lequel est placée la cellule 22. Cette perturbation entraîne une variation de la différence de potentiel dans la cellule 22. Une information concernant cette variation est alors transmise au dispositif d'allumage des feux de stop.

Une partie 28 de l'alésage 23 a sensiblement la forme d'un cylindre de révolution autour d'un axe 29. Un diamètre 30 dudit cylindre est imposé par des contraintes de réalisation du corps 18 du maître cylindre 2. La chambre primaire 14, zone de l'alésage 19 dans laquelle coulisse le piston primaire 13, est susceptible de subir une montée en pression lors du fonctionnement du maître cylindre. D'autre part, une partie du maître cylindre contenue dans la chambre avant 9 est susceptible de subir une pression plus faible que la pression atmosphérique lors du fonctionnement du servomoteur.

Ces différences de pression nécessitent de maintenir une épaisseur de paroi suffisante, d'une part entre l'alésage 19 et l'alésage 23, et d'autre part entre l'alésage 23 et l'extérieur du corps 18. Ces contraintes imposent donc une valeur maximale au diamètre 30. Par exemple, le diamètre 30 ne peut dépasser 5 mm environ.

Dans l'état de la technique, l'alésage 23 se présente le plus souvent comme un trou borgne, c'est-à-dire que l'une de ses extrémités 32, proche du fond 17 du maître cylindre, n'est pas débouchante. Lors de l'assemblage du maître cylindre, la tige 24 doit donc être introduite par l'autre extrémité 33 de l'alésage 23, ladite extrémité 33 se trouvant dans la chambre avant 9.

Ce mode de réalisation rend problématique l'introduction, dans l'alésage 23, d'un aimant 27 possédant un diamètre externe supérieur au diamètre maximal 30. Or, un aimant de diamètre externe 30 peut ne pas générer de champ magnétique suffisamment intense pour assurer une détection efficace de la cellule 22 à effet Hall. La détection serait optimisée en augmentant légèrement le diamètre externe de l'aimant 27.

L'invention a résolu ce problème en modifiant la forme de l'alésage 23. Selon le mode de réalisation de l'invention représenté à la figure 2, l'alésage 23 comporte deux parties (28, 34). La partie 34 de l'alésage 23 s'étend de l'extrémité 32 de l'alésage à une zone proche de la cellule 22 de détection à effet Hall. La partie 28 de l'alésage 23 se situe entre la partie 34 et l'extrémité 33 de l'alésage, l'extrémité 33 se situant dans la chambre avant 9 du servomoteur.

La partie 34 de l'alésage 23 a sensiblement la forme d'un cylindre de révolution autour d'un axe 35. L'axe 35 est parallèle à l'axe 29 de la partie 28. Un diamètre 36 de la partie 34 est supérieur au diamètre 30 de la partie 28.

De manière préférentielle, le diamètre 36 est compris entre 1,25 et 1,75 fois le diamètre 30. De manière plus préférentielle, le diamètre 36 est compris entre 1,40 et 1,60 fois le diamètre 30.

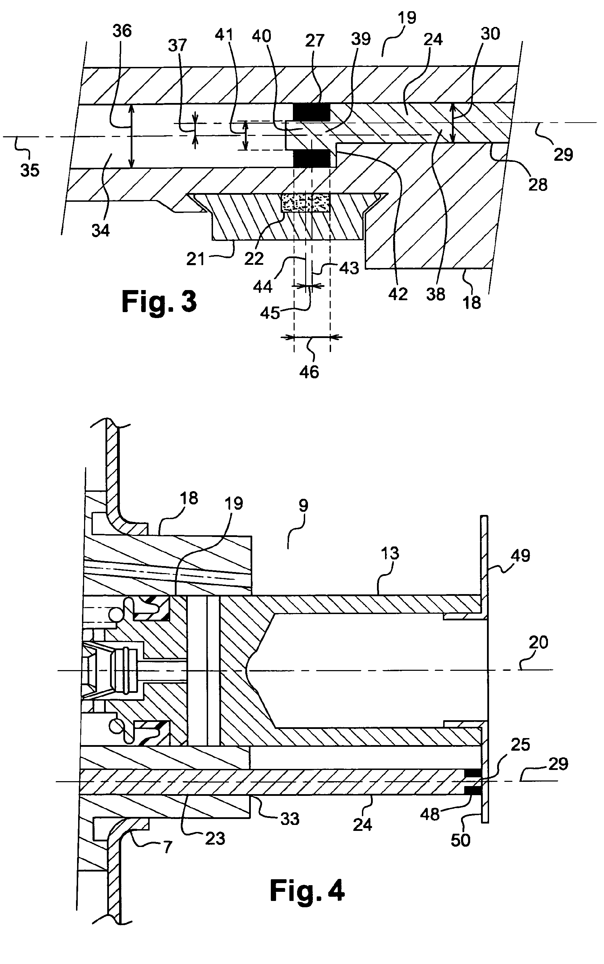

La figure 3 représente un agrandissement d'une partie de la figure 2. On distingue notamment les parties 28 et 34 de l'alésage 23, la tige 24, l'aimant 27, le détecteur 21 de champ magnétique et la cellule 22 à effet Hall.

Les parties 28 et 34 de l'alésage 23 peuvent êtres positionnées de différentes manières l'une par rapport à l'autre. Par exemple, on pourrait réaliser l'alésage 23 de manière à ce que l'axe 29 de la partie 28 et l'axe 35 de la partie 34 soient confondus.

Cependant, de manière préférentielle, on cherche à rapprocher au maximum l'aimant 27 de la cellule 22. De plus, de manière préférentielle, on cherche à préserver une épaisseur sensiblement constante le long d'une paroi qui sépare l'alésage 23 et l'alésage 19. On cherche notamment à obtenir une épaisseur similaire au niveau de la chambre primaire 14 et de la chambre secondaire 15.

A cet effet, de manière préférentielle, une distance 37 entre les deux axes (29, 35) est sensiblement égale à la moitié de la différence entre les diamètres (30, 36), l'axe 35 étant plus proche du détecteur 21 que l'axe 29.

De manière préférentielle, les axes 20, 29 et 35 sont coplanaires.

La tige 24 comporte deux parties. Une première partie 38 a sensiblement la forme d'un cylindre de révolution autour de l'axe 29, le diamètre dudit cylindre étant égal au diamètre 30. La partie 38 a donc une forme sensiblement complémentaire à une forme de la partie 28 de l'alésage 23. Une seconde partie 39 a sensiblement la forme d'un cylindre de révolution autour de l'axe 35, le diamètre dudit cylindre étant égal au diamètre 36.

A une extrémité orientée vers l'extrémité 32 de l'alésage 23, la partie 39 de la tige 24 comporte un rétrécissement 40. Ledit rétrécissement a la forme d'un cylindre de révolution autour de l'axe 35, le diamètre 41 dudit cylindre étant inférieur au diamètre 36 de la partie 39. Sur ce rétrécissement 40 est emboîté l'aimant 27. Ledit aimant 27 a une section annulaire, de diamètre interne 41 et de diamètre externe 36. L'ensemble partie 39 / aimant 27 a donc une forme sensiblement complémentaire à une forme de la partie 34 de l'alésage 23.

En raison de la différence des diamètres (30, 36), la jonction des parties (28, 34) de l'alésage 23 forme une butée 42.

Les figures 2 et 3 représentent l'état du dispositif maître cylindre en l'absence de freinage. Le piston primaire 13 est alors à son minimum d'engagement dans l'alésage 19. En l'absence de freinage, une extrémité de la partie 39, orientée vers la chambre avant 9, est au contact de la butée 42.

Dans cette situation, l'aimant 27 se situe à faible distance de la cellule 22 à effet Hall. Plus précisément, on considère un axe 43, dans le plan de la figure 3, ledit axe 43 passant par un plan de symétrie, perpendiculaire à l'axe 29, de l'aimant 27. On considère également un axe 44, dans le plan de la figure 3, ledit axe 44 passant par un plan de symétrie, perpendiculaire à l'axe 29, de la cellule 22. En l'absence de freinage, une distance 45 entre les axes 43 et 44 est inférieure à 20% d'une longueur 46 de l'aimant 27. Préférentiellement, l'axe 43 est plus proche de la butée 42 que l'axe 44.

Ainsi, en l'absence de freinage, l'aimant 27 se situe en regard de la cellule 22. La cellule 22 est en mesure de détecter un champ magnétique émis par l'aimant 27. Selon l'invention, l'aimant 27 a un diamètre tel que l'intensité du champ magnétique émis est suffisante pour la sensibilité de la cellule 22.

Au cours du freinage, le piston primaire 13 coulisse dans l'alésage 19, en direction du fond 17 du maître cylindre. Le piston primaire entraîne la tige 24 qui coulisse dans l'alésage 23. L'aimant 27 se déplace donc en direction de l'extrémité 32 de l'alésage 23.

Ce déplacement perturbe le champ magnétique dans lequel est placée la cellule 22. La longueur 46 de l'aimant 27 est faible par rapport à une longueur de course du piston primaire 13. En conséquence, un faible niveau de déplacement du piston primaire 13 suffit à déclencher l'allumage des feux de stop.

Afin de réaliser la forme de l'invention représentée à la figure 2, l'alésage 23 est débouchant à ses deux extrémités (32, 33). Ainsi, la tige 24 munie de l'aimant 27 peut être introduite dans l'alésage 23 par l'extrémité 32, la plus large. L'extrémité 32 est ensuite fermée par un moyen 47 de bouchage (figure 2), par exemple un bouchon.

La figure 4 représente un agrandissement d'une partie de la figure 2. On distingue notamment le corps 18 du maître cylindre, le cylindre 7, la chambre avant 9, le piston primaire 13, l'alésage 19, l'axe 20, la tige 24, l'alésage 23, l'axe 29 et l'extrémité 33 dudit alésage 23, orientée vers la chambre avant 9.

L'extrémité 25 de la tige 24 est reliée au piston primaire 13, afin que la tige 24 accompagne les déplacements dudit piston primaire 13. Lorsque le piston primaire 13 coulisse dans l'alésage 19 dans la direction de l'axe 20, la tige 24 effectue le même déplacement dans l'alésage 23, dans la direction de l'axe 29.

Afin que ces déplacements simultanés s'effectuent avec un minimum de frottements, il convient que les axes 20 et 29 soient parallèles. Or, au cours de l'usinage du maître cylindre, il arrive qu'un décalage se produise entre la direction de l'axe 20 et celle de l'axe 29.

Il est donc souhaitable que la liaison entre la tige 24 et le piston primaire 13 permette de compenser ce décalage au cours du déplacement de l'ensemble tige 24 / piston 13. Ladite liaison doit donc présenter au moins un degré de liberté.

Dans l'état de la technique est couramment utilisé un ressort de rappel, qui présente néanmoins des contraintes et un coût de réalisation importants. La Demanderesse a donc cherché un autre moyen de liaison entre la tige 24 et le piston primaire 13, en tenant compte du fait que ladite liaison subit un effort très faible lors du fonctionnement du dispositif maître cylindre.

Ce problème a été résolu au moyen d'un aimant 48, fixé à l'extrémité 25 de la tige 24. De manière préférentielle, l'aimant 48 est de forme annulaire et emboîté sur un rétrécissement de la tige 24.

De manière préférentielle, un diamètre externe de l'aimant 48 est égal au diamètre 30 de la partie 38 de la tige 24, qui est également le diamètre de la partie 28 de l'alésage 23. Toutefois, d'autres diamètres peuvent être utilisés. Par exemple, si on souhaite une liaison plus forte entre la tige 24 et le piston primaire 13, on peut également utiliser un aimant de diamètre externe supérieur au diamètre 30. La course du piston primaire 13 en serait éventuellement diminuée.

L'aimant 48 est lié magnétiquement à un élément métallique 49, monté fixe sur le piston primaire 13. Préférentiellement, l'élément 49 est en acier. Préférentiellement, une surface 50 de l'élément 49, en contact avec l'aimant 48, est comprise dans un plan sensiblement perpendiculaire à l'axe 29. Toutefois, en cas de légère inclinaison entre le plan de la surface 50 et un plan perpendiculaire à l'axe 29, la force du champ magnétique de l'aimant 48 peut permettre de maintenir une liaison avec l'élément 49.

On considère un cas où l'axe 20 de l'alésage 19 et l'axe 29 de l'alésage 23 ne sont pas parfaitement parallèles. Lors d'un déplacement du piston primaire 13 et de la tige 24, respectivement dans l'alésage 19 et dans l'alésage 23, le décalage de direction entre les axes (20, 29) entraîne un déplacement de la tige 24 dans une direction perpendiculaire à l'axe 29. La nature magnétique de la liaison aimant 48 / élément 49 permet à l'aimant 48 de glisser sur la surface 50, dans la direction de déplacement, perpendiculaire à l'axe 29, de la tige 24. Ainsi, un contact entre l'aimant 48 et l'élément 49 est maintenu, sans entraver les mouvements de l'ensemble piston 13/tige 24.

Un dispositif selon l'invention assure donc une détection précoce du freinage d'un véhicule, entraînant l'allumage des feux de stop au tout début de la phase de freinage. De plus, une forme particulière de l'invention offre une amélioration, en termes de coût et de facilité de réalisation, d'un élément nécessaire au système de détection du freinage.

## Revendications

1. Dispositif maître cylindre pour véhicule automobile, comprenant :
- un maître cylindre (2), muni d'un piston primaire (13),
- un capteur de position du piston (13) dans un corps (18) du maître cylindre (2), ledit capteur commandant un dispositif d'allumage de feux de stop, ledit capteur comportant :
- un détecteur (21) de champ magnétique, fixé sur le corps (18) du maître cylindre,
- un aimant (27) solidaire d'une tige (24), ladite tige étant reliée au piston primaire (13) et coulissant dans un alésage (23) sensiblement parallèle à un alésage (19) dans lequel coulisse le piston primaire,
**caractérisé en ce que** l'alésage (23) comporte deux parties (28, 34) de formes sensiblement cylindriques de révolution, un diamètre (36) d'une partie (34), située proche du détecteur (21), étant plus large de 1,25 à 1,75 fois qu'un diamètre (30) d'une partie (28), située proche d'une zone (14) de coulissement du piston primaire (13) dans le corps (18) du maître cylindre et que la tige (24) est reliée au piston primaire (13) par l'intermédiaire d'un second aimant (48), solidaire de ladite tige (24), lié magnétiquement à un élément métallique (49), solidaire dudit piston primaire (13).

2. Dispositif maître cylindre selon la revendication 1 **caractérisé en ce qu'**un axe (35) de la partie de plus large diamètre (34) est parallèle à un axe (29) de la partie de plus étroit diamètre (28), l'axe (35) de la partie de plus large diamètre (34) étant plus proche du détecteur (21) de champ magnétique que l'axe (29) de la partie de plus étroit diamètre (28).

3. Dispositif maître cylindre selon la revendication 2, **caractérisé en ce qu'**une distance (37) entre l'axe (29) de la partie du plus étroit diamètre (28) et l'axe (35) de la partie de plus large diamètre (34) est sensiblement égale à la moitié de la différence entre les diamètres (36,30).

4. Dispositif maître cylindre selon l'une des revendications précédentes, **caractérisé en ce que** l'aimant (27), solidaire d'une partie (39) de la tige (24) coulissant dans la partie de plus large diamètre (34) de l'alésage (23), a une section annulaire de diamètre externe égal au diamètre (36) de la partie de plus large diamètre (34).

5. Dispositif maître cylindre selon l'une des revendications précédentes, **caractérisé en ce que** le détecteur (21) de champ magnétique est muni d'une cellule (22) à effet Hall.

6. Dispositif maître cylindre selon l'une des revendications précédentes, **caractérisé en ce que** l'alésage (23) de la tige est débouchant à deux extrémités (32, 33), l'extrémité (33) qui débouche du côté opposé au piston primaire (13) étant fermée par un moyen (47) de bouchage.

7. Dispositif maître cylindre selon la revendication 1, **caractérisé en ce que** l'aimant (48) est annulaire, avec un diamètre externe égal au diamètre (30) de la partie de plus étroit diamètre (28) de l'alésage (23).

8. Dispositif maître cylindre selon la revendication 1 ou la revendication 7, **caractérisé en ce que**, au cours d'un déplacement en translation d'un ensemble tige (24) / piston primaire (13), l'aimant (48) peut glisser sur une surface (50) de contact entre ledit aimant (48) et l'élément métallique (49), dans une direction perpendiculaire à un axe (29) dudit déplacement en translation.

## Patentansprüche

1. Hauptbremszylindervorrichtung für ein Kraftfahrzeug, die Folgendes umfasst:
- einen Hauptbremszylinder (2), der mit einem Primärkolben (13) versehen ist,
- einen Kolbenpositionssensor (13) in einem Körper (18) des Hauptbremszylinders (2), wobei der Sensor eine Vorrichtung zur Beleuchtung der Bremslichter steuert, wobei der Sensor Folgendes umfasst:
- einen Magnetfelddetektor (21), der am Körper (18) des Hauptbremszylinders befestigt ist,
- einen Magneten (27), der mit einer Stange (24) fest verbunden ist, wobei die Stange mit dem Primärkolben (13) verbunden ist und in einer Bohrung (23) gleitet, die zu einer Bohrung (19), in der der Primärkolben gleitet, im Wesentlichen parallel ist,
**dadurch gekennzeichnet, dass** die Bohrung (23) zwei Teile (28, 34) mit einer im Wesentlichen drehzylindrischen Form umfasst, wobei ein Durchmesser (36) eines Teils (34), der sich in der Nähe des Sensors (21) befindet, größer als das 1,25-1,75-Fache eines Durchmessers (30) eines Teils (28), der sich in der Nähe eines Gleitbereichs (14) des Primärkolbens (13) in dem Körper (18) des Hauptbremszylinders befindet, ist, und dass die Stange (24) durch einen mit der Stange (24) fest verbundenen zweiten Magneten (48), der mit einem mit dem Primarkolben (18) test verbundenen metallischen Element (49) magnetisch verbunden ist, mit dem Primärkolben (13) verbunden ist.

2. Hauptbremszylindervorrichtung nach Anspruch 1, **dadurch gekennzeichnet, dass** eine Achse (35) des Teils mit dem größeren Durchmesser (34) zu einer Achse (29) des Teils mit dem schmaleren Durchmesser (28) parallel verläuft, wobei die Achse (35) des Teils mit dem größeren Durchmesser (34) näher am Magnetfelddetektor (21) liegt als die Achse (29) des Teils mit dem schmaleren Durchmesser (28).

3. Hauptbremszylindervorrichtung nach Anspruch 2, **dadurch gekennzeichnet, dass** ein Abstand (37) zwischen der Achse (29) des Teils mit dem schmaleren Durchmesser (28) und der Achse (35) des Teils mit dem größeren Durchmesser (34) im Wesentlichen der Hälfte der Differenz zwischen den Durchmessern (36, 30) entspricht.

4. Hauptbremszylindervorrichtung nach einem der vorgehenden Ansprüche, **dadurch gekennzeichnet, dass** der Magnet (27), der mit einem Teil (39) der Stange (24) fest verbunden ist, die in dem Teil mit dem größeren Durchmesser (34) der Bohrung (23) gleitet, einen kreisförmigen Querschnitt mit einem Außendurchmesser, der dem Durchmesser (36) des Teils mit dem größeren Durchmesser (34) entspricht, aufweist.

5. Hauptbremszylindervorrichtung nach einem der vorhergehenden Ansprüche, **dadurch gekennzeichnet, dass** der Magnetfelddetektor (21) mit einer Hall-Effekt-Zelle (22) versehen ist.

6. Hauptbremszylindervorrichtung nach einem der vorgehenden Ansprüche, **dadurch gekennzeichnet, dass** die Bohrung (23) der Stange an beiden Enden (32, 33) öffnet, wobei das Ende (33), das zur dem Primärkolben (13) gegenüberliegenden Seite öffnet, mit einem Stopfmittel (47) verschlossen ist.

7. Hauptbremszylindervorrichtung nach Anspruch 1, **dadurch gekennzeichnet, dass** der Magnet (48) ringförmig ist und einen Außendurchmesser aufweist, der dem Durchmesser (30) des Teils mit dem schmaleren Durchmesser (28) der Bohrung (23) entspricht.

8. Hauptbremszylindervorrichtung nach Anspruch 1 oder Anspruch 7, **dadurch gekennzeichnet, dass** der Magnet (48) bei der Translationsbewegung einer Anordnung aus Stange (24) und Primärkolben (13) auf einer Kontaktfläche (50) zwischen dem Magneten (48) und dem metallischen Element (49) in einer zu einer Achse (29) der Translationsbewegung senkrechten Richtung gleiten kann.

## Claims

1. Master cylinder device for a motor vehicle, comprising:
- a master cylinder (2) equipped with a primary piston (13),
- a position sensor for the position of the piston (13) in a body (18) of the master cylinder (2), the said sensor commanding a device for illuminating the brake lights, the said sensor comprising:
- a magnetic-field detector (21), fixed to the body (18) of the master cylinder,
- a magnet (27) secured to a rod (24), said rod being connected to the primary piston (13) and sliding in a bore (23) substantially parallel to a bore (19) in which the primary piston slides,
**characterized in that** the bore (23) comprises two parts (28, 34) which are substantially cylinders of revolution, a diameter (36) of a part (34) situated near the detector (21) being 1.25 to 1.75 times larger than a diameter (30) of a part (28) situated near a zone (14) in which the primary piston (13) slides in the body (18) of the master cylinder, and **in that** the rod (24) is connected to the primary piston (13) via a second magnet (48), secured to the said rod (24), magnetically connected to a metallic element (49) secured to the said primary piston (13).

2. Master cylinder device according to Claim 1, **characterized in that** an axis (35) of the larger-diametter part (34) is parallel to an axis (29) of the narrower-diameter part (28), the axis (35) of the larger-diameter part (34) being closer to the magnetic-field detector (21) than the axis (29) of the narrower-diameter part (28).

3. Master cylinder device according to Claim 2, **characterized in that** a distance (37) between the axis (29) of the narrower-diameter part (28) and the axis (35) of the larger-diameter part (34) is substantially equal to half the difference between the diameters (36, 30).

4. Master cylinder device according to one of the preceding claims, **characterized in that** the magnet (27), secured to a part (39) of the rod (24) sliding in the larger-diameter part (34) of the bore (23), has an annular cross-section with an outside diameter equal to the diameter (36) of the larger-diameter part (34).

5. Master cylinder device according to one of the preceding claims, **characterized in that** the magnetic-field detector (21) is equipped with a Hall-effect cell (22).

6. Master cylinder device according to one of the preceding claims, **characterized in that** the bore (23) of the rod opens at both ends (32, 33), the end (33) that opens on the opposite side to the primary piston (13) being closed by a plugging means (47).

7. Master cylinder device according to Claim 1, **characterized in that** the magnet (48) is annular with an outside diameter equal to the diameter (30) of the narrower-diameter part (28) of the bore (23).

8. Master cylinder device according to Claim 1 or Claim 7, **characterized in that** during a translational movement of an assembly made up of rod (24) and primary piston (13), the magnet (48) can slide over a surface (50) of contact between the said magnet (48) and the metallic element (49) in a direction perpendicular to an axis (29) of the said translational movement.
